# FASCICULE DE BREVET EUROPEEN

(11) **EP 0 426 558 B1**
(45) Date de publication et mention de la délivrance du brevet: **04.01.1995**
(21) Numéro de dépôt: 90403065.7
(22) Date de dépôt: 30.10.1990
(51) Int. Cl.: G01B 11/02

(54) **Procédé de mesure automatique de kératométrie et appareil pour la mise en oeuvre de ce procédé**
Verfahren und automatisches Messen der Keratometrie und Einrichtung zur Durchführung des Verfahrens
Keratometry procedure and automatic measurement and apparatus to implement said procedure

(30) Priorité: 31.10.1989 FR 8914257
(43) Date de publication de la demande: 08.05.1991
(73) Titulaire: LUNEAU S.A., F-28360 Prunay le Gillon (FR)
(72) Inventeur: Lormois, Jean-Pierre, F-28630 Barjouville (FR); Lafond, Patrick, F-91620 Nozay (FR)
(74) Mandataire: Hud, Robert

(56) Documents cités:
- US-A- 3 533 683
- US-A- 3 598 107
- US-A- 4 275 964
- US-A- 4 609 287
- MESSEN + PRUFEN, vol. 13, no. 1/2, janvier 1977, Bad Wörishofen, DE, pages 34-41; Näther: "Digitale Datenverarbeitung bei messenden TV-Systemen mit dem Polyprocessor"

## Description

La présente demande de brevet a pour objet un procédé de mesure de kératométrie, c'est-à-dire un procédé de mesure des rayons de la face externe de la cornée de l'oeil, ainsi qu'un appareil automatique, dit autokératomètre, assurant la mise en oeuvre de ce procédé.

Comme on le sait, la cornée de l'oeil est considérée en première approche comme sphérique, mais en réalité elle est assimilable dans la plupart des cas à une surface torique avec un axe principal ou se situe le plus grand rayon de courbure et un axe secondaire, qui lui est perpendiculaire, où se situe le plus petit rayon de courbure. L'objet de la mesure est alors de déterminer la valeur du grand rayon de courbure, celle du petit rayon de courbure, ainsi que la position angulaire de l'axe principal de la cornée. La connaissance de ces éléments est en effet importante en ophtalmologie, pour un but de correction, la convergence due à la cornée étant prépondérante dans la convergence de l'oeil.

On connait un procédé de mesure automatique de kératométrie selon lequel, pour déterminer les valeurs du grand et du petit rayons de courbure de la cornée ainsi que celle de la position angulaire de l'axe principal, on effectue les opérations suivantes :
- disposition devant la cornée de l'oeil à examiner d'une source lumineuse en forme de couronne circulaire,
- décomposition de l'image elliptique de la source lumineuse donnée par la cornée en cinq images différentes, décalées et tournées les unes par rapport aux autres,
- interposition sur chacun des cinq morceaux d'image ainsi obtenus d'un élément de photodiode linéaire de façon que, en fonction de la taille de l'ellipse, l'intersection de chaque morceau d'image avec l'élément linéaire soit située plus ou moins près du début de cet élément, pour fournir ainsi cinq informations,
- traitement des cinq informations par ordinateur, au moyen d'un logiciel adapté, afin d'obtenir l'allure de l'ellipse et extraction des valeurs des deux rayons de courbure et de la position angulaire de l'axe principal.

Ce procédé, utilisant la décomposition en cinq parties d'une image donnée par la cornée, présente l'inconvénient de nécessiter un dispositif optique complexe, comprenant entre autres un prisme en forme de pyramide à cinq côtés, qui est coûteux et d'un règlage délicat. Les éléments électroniques également nécessaires sont nombreux, ce qui joue défavorablement sur le prix de revient et entraîne des difficultés de règlage. De plus, le nombre d'informations utiles qui sont recueillies et traitées est assez peu important, ce qui peut se ressentir au niveau de la précision de la mesure effectuée.

Par le document US-A-4 609 287 on connait un procédé de kératométrie automatique selon lequel on utilise trois rayons lumineux collimatés et parallèles à l'axe optique, qui sont dirigés sur la cornée à mesurer. Les trois rayons sont réfléchis par le dioptre de la cornée et sont repris chacun séparément par une lentille et un miroir, qui les focalisent et les renvoient sur un même photo-détecteur situé sur l'axe optique des rayons sources.

Le document US-A-4 275 964 décrit un frontofocomètre automatique qui comprend différents moyens de transformation, en signaux électroniques analysables, de l'image de l'ellipse à mesurer. Selon une forme de réalisation décrite, l'image de l'ellipse est balayée par des trous disposés en spirale sur un masque entraîné et asservi en rotation par un moteur pas à pas. Les signaux lumineux obtenus lorsqu'un trou passe sur l'image de l'ellipse sont focalisés par une lentille sur une photodiode mono-élément.

La présente invention a pour objet de remédier aux inconvénients présentés par les procédés connus de mesure automatique de kératométrie et elle propose à cet effet un procédé de mesure automatique de kératométrie, ainsi qu'un appareillage pour la mise en oeuvre de ce procédé, qui sont d'un prix de revient modéré, qui fournissent des mesures d'une excellente précision et, qui ne nécessitent pas de règlages difficiles.

Selon l'invention, le procédé de mesure automatique de kératométrie comporte les phases successives suivantes :
- disposition d'une source lumineuse en forme de couronne circulaire devant la cornée de l'oeil à examiner,
- transformation de l'image elliptique de ladite source fournie par la cornée en un signal vidéo-électronique constitué d'une succession de lignes vidéo-électroniques correspondant chacune à une ligne horizontale de l'image, l'importance du signal étant fonction de la luminosité de l'image par rapport au fond,
- mesure, sur chacune des lignes vidéo-électroniques du signal, des informations de durée caractérisant l'image, et
- traitement par ordinateur au moyen d'un logiciel approprié de l'ensemble des informations obtenues à partir de la totalité des lignes vidéo-électroniques de signal, pour en extraire les informations de valeur recherchées relatives au grand rayon de courbure de la cornée, au petit rayon de courbure et à la position angulaire de l'axe principal.

Plus particulièrement, selon le procédé de l'invention, chaque ligne vidéo-électronique du signal correspondant à une ligne horizontale de l'image elliptique lumineuse sur fond sombre, comporte un pic qui correspond à chaque partie d'image présente sur la ligne horizontale considérée, ce nombre de pics étant compris entre zéro et deux. Pour chaque ligne vidéo-électronique on procède au comptage de la durée entre le début de la ligne et le premier pic, puis de la durée entre le premier pic et le second pic, et ce sont ces deux informations de durée (décrivant numériquement l'ellipse) de chacune des lignes de la succession de lignes vidéo-électroniques de signal qui sont traitées par ordinateur pour fournir les valeurs recherchées concernant les longueurs du grand et du petit rayons de courbure, et la position angulaire de l'axe principal.

Selon l'invention, pour la mise-en-oeuvre de ce procédé, l'appareillage utilisé comprend une source lumineuse en forme de cercle à disposer devant la cornée, une caméra matricielle et un système optique interposé entre l'oeil à examiner et la caméra matricielle pour transporter sur cette dernière l'image optique de la source lumineuse donnée par la cornée, et un dispositif électronique coopérant avec la sortie de la caméra matricielle pour procéder aux opérations de comptage sur le signal vidéo-électronique fourni par cette caméra.

On comprend que le dispositif de mesure automatique de kératométrie selon l'invention, ou autokératomètre, peut être utilisé seul mais qu'il peut aussi être avantageusement combiné avec un appareil réfractomètre automatique conventionnel de façon, en utilisant un certain nombre d'éléments de la structure générale de ce réfractomètre, à fournir un appareil unique qui assure les deux fonctions (autoréfractomètre et autokératométre) sans être d'un coût significativement plus élevé que celui de l'autoréfractomètre seul.

Pour bien faire comprendre l'invention, on en décrira ci-après, à titre d'exemple sans caractère limitatif, une forme d'exécution préférée en référence au dessin schématique annexé dans lequel :
la figure 1 est un schéma de principe d'un dispositif kératomètre automatique, conçu pour la mise en oeuvre du procédé selon l'invention ;
la figure 2 est une vue de l'image optique elliptique captée par la caméra matricielle du dispositif de la figure 1 ;
la figure 3 est un schéma montrant une ligne vidéo-électronique de signal fournie par la caméra matricielle et correspondant à une ligne horizontale de l'image de la figure 2 ;
la figure 4 est un schéma correspondant à la figure 3, qui montre la ligne vidéo-électronique de signal après binarisation du signal par comparaison à un niveau de seuil ; et
la figure 5 est un schéma correspondant à la figure 4 montrant la ligne vidéo-électronique de signal après traitement pour comptage de durées.

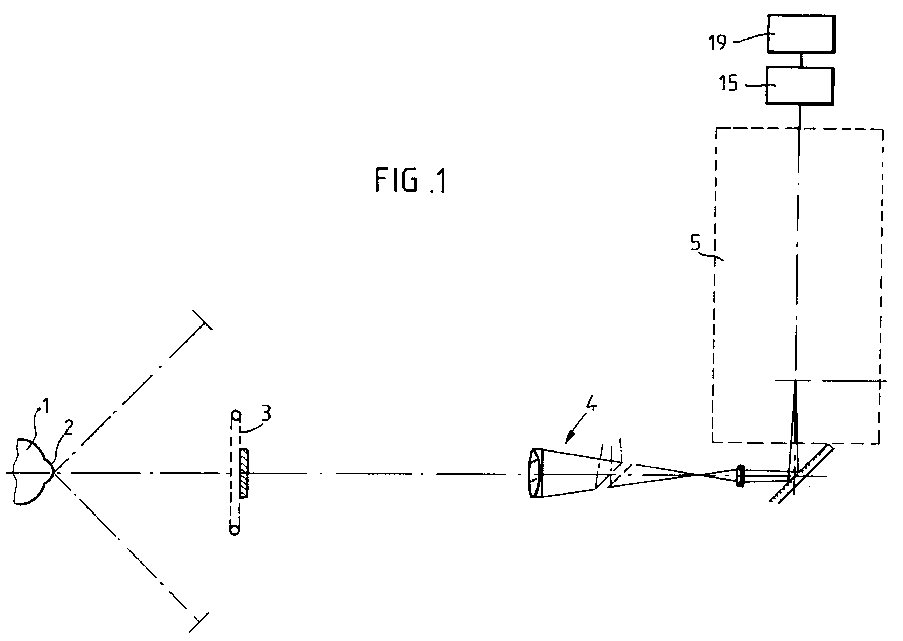

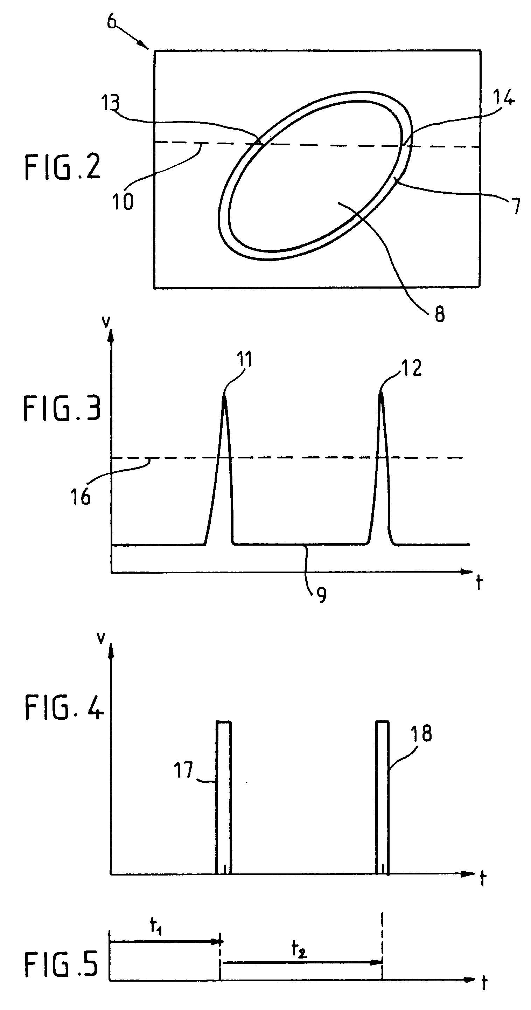

En référence à la figure 1 on a schématisé en 1 l'oeil à examiner et en 2 la cornée dont on désire obtenir la mesure des grandeurs caractéristiques, c'est-à-dire la longueur du grand rayon de courbure, du petit rayon de courbure et la position angulaire de l'axe principal. On a représenté en 3 un tube flash constituant une source lumineuse en forme de couronne circulaire dont la cornée 2, agissant comme un miroir, donne une image elliptique. Un doublet optique 4 permet de transférer cette image sur une caméra CCD matricielle 5, dite "à imageur solide". On a montré sur la figure 2 l'image optique 6 fournie à la caméra 5 et qui est constituée par l'image elliptique d'un cercle lumineux 7 sur un fond sombre 8.

La caméra 5 fournit alors un signal vidéo-électronique, au standard CCIR, qui décrit entièrement l'image 6 et qui est formé par deux trames de 288 lignes vidéo chacune, chaque ligne vidéo représentant une ligne horizontale de l'image 6, l'amplitude du signal électronique sur la ligne vidéo étant d'autant plus importante que l'image est blanche. Sur la figure 3 on a représenté une ligne de signal vidéo 9 qui correspond à la ligne horizontale 10 de l'image optique 6. On voit que l'amplitude du signal présente deux pics 11,12 correspondant respectivement aux parties 13 et 14 de l'image elliptique 7 sur la ligne 10.

Grâce à une carte électronique 15, branchée à la sortie de la caméra 5, on réalise pour chacune des lignes 9 de signal vidéo, en temps réel, les opérations consistant :
- en une binarisation du signal, par comparaison de celui-ci à un niveau de seuil (figuré en 16 sur la figure 3) de façon à obtenir un signal à deux pics 17, 18 sans niveaux de gris (voir figure 4),
- en un comptage de la durée t₁ s'écoulant entre le début de la ligne de signal vidéo et le premier pic 17, et de la durée t₂ s'écoulant entre le premier pic 17 et le second pic 18 (voir figure 5).

Ces deux valeurs obtenues pour chacune des 576 lignes de la trame du signal vidéo sont entrées sur une carte à microprocesseur 19 et constituent ainsi un maximum de 1152 valeurs décrivant numériquement l'image de forme elliptique. Il suffit alors de traiter ces valeurs par l'algorithme d'un logiciel approprié pour en extraire les valeurs recherchées du grand rayon de courbure, du petit rayon de courbure et de la position angulaire de l'axe principal de la cornée 2 de l'oeil 1 examiné.

On notera qu'on peut avantageusement associer le kératomètre automatique selon la présente invention à un réfractomètre automatique conventionnel pour proposer alors un appareil unique, assurant les deux fonctions, dont le surcoût par rapport à l'appareil réfractomètre automatique seul est peu important. En effet, dans ce cas, on évite alors la duplication d'un certain nombre d'éléments de la structure générale de l'appareil qui sont utilisables pour les deux fonctions.

On comprendra que la description ci-dessus a été donnée à simple titre d'exemple, sans caractère limitatif, et que des adjonctions ou des modifications constructives pourraient y être apportées sans sortir du cadre de l'invention déterminée par les revendications qui suivent.

## Revendications

1. Procédé de mesure automatique de kératométrie consistant à disposer une source lumineuse (3) en forme de couronne circulaire devant la cornée (2) de l'oeil (1) à examiner, et à traiter des informations numériques relatives à l'image elliptique (7) de la couronne (3) donnée par la cornée (2) pour en extraire les valeurs du grand rayon de courbure, du petit rayon de courbure et de la position angulaire de l'axe principal de la cornée (2), caractérisé en ce que l'image elliptique (7) donnée par la cornée (2) est transformée, par une caméra matricielle réalisant une mesure basée sur un grand nombre de points et en un temps très bref, en un signal vidéo-électronique constitué d'une succession de lignes vidéo-électroniques (9) correspondant chacune à une ligne horizontale (10) de l'image elliptique (7) et dont l'amplitude est fonction du contraste de l'image (7) par rapport à son fond (8), en ce qu'on mesure sur chaque ligne vidéo-électronique (9) du signal des indications de durée (t₁, t₂) caractérisant les parties (13, 14) de l'image (7) appartenant à la ligne horizontale (10) correspondante de l'image (7), et en ce qu'on traite sur ordinateur (19) au moyen d'un logiciel approprié l'ensemble des indications de durée correspondant à la succession de lignes vidéo-électroniques (9) du signal.

2. Procédé selon la revendication 1, caractérisé en ce que chaque ligne de signal vidéo (9) présente deux pics (11, 12) correspondant aux parties (13, 14) de l'image (7) présentes sur la ligne horizontale (10) correspondante de l'image (7), lesdites indications de durée (t₁, t₂) mesurées étant celles séparant le début de la ligne vidéo (9) du premier pic (11) et séparant entre eux le premier pic (11) et le second pic (12).

3. Procédé selon la revendication 2 caractérisé en ce que, préalablement à ladite mesure des indications de durée, on procède à une binarisation du signal pour supprimer les niveaux de gris.

4. Appareillage pour la mise en oeuvre du procédé selon l'une quelconque des revendications 1 à 3, caractérisé en ce qu'il comprend une source lumineuse en forme de couronne circulaire (3), une caméra matricielle (5), un objectif (4) formant l'image de la source lumineuse (3) donnée par la cornée (2) de l'oeil (1) à examiner, une carte électronique (15) branchée à la sortie de la caméra matricielle (5) et fournissant, à partir d'un signal vidéo fait d'une pluralité de lignes vidéo (9) et fourni par la caméra matricielle (5), une pluralité de valeurs numériques (t₁, t₂) décrivant l'image elliptique (7), et un élément à microprocesseur (19) recevant et traitant ladite pluralité de valeurs numériques (t₁, t₂) pour extraire les informations de valeur du grand rayon de courbure, du petit rayon de courbure et de la position angulaire de l'axe principal de la cornée (2).

5. Appareillage selon la revendication 4, caractérisé en ce que ladite carte électronique (15) branchée à la sortie de la caméra matricielle (5) comprend des moyens de binarisation du signal vidéo fourni par la caméra (5).

6. Appareillage selon la revendication 4 ou la revendication 5 caractérisé en ce qu'il est associé, dans une structure générale commune, avec un appareil réfractomètre automatique.

## Claims

1. Method of automatic keratometry measurement consisting of disposing a light source (3) in the form of a circular crown in front of the cornea (2) of the eye (1) to be examined, and processing the digital information relating to the elliptical image (7) of the crown (3) given by the cornea (2) in order to extract therefrom the values of the large radius of curvature, the small radius of curvature and the angular position of the principal axis of the cornea (2), characterised in that the elliptical image (7) given by the cornea (2) is transformed, by a matrix camera carrying out a measurement based on a large number of points and in a very short time, into a video-electronic signal consisting of a succession of video-electronic lines (9) each corresponding to a horizontal line (10) of the elliptical image (7) and of which the amplitude is a function of the contrast of the image (7) with respect to its background (8), and that on each video-electronic line (9) of the signal indications of duration (t₁, t₂) are measured which characterise the parts (13, 14) of the image (7) belonging to the corresponding horizontal line (10) of the image (7), and that all of the indications of duration corresponding to the succession of video-electronic lines (9) of the signal are processed on a computer (19) by means of appropriate software.

2. Method as claimed in Claim 1, characterised in that each video signal line (9) has two peaks (11, 12) corresponding to the parts (13, 14) of the image (7) presented on the corresponding horizontal line (10) of the image (7), the said measured indications of duration (t₁, t₂) being those separating the start of the video line (9) from the first peak (11) and separating the first peak (11) and the second peak (12) from one another.

3. Method as claimed in Claim 2, characterised in that, prior to the said measurement of the indications of duration binarisation of the signal is carried out in order to suppress the grey levels.

4. Apparatus for carrying out the method as claimed in any one of Claims 1 to 3, characterised in that it comprises a light source in the form of a circular crown (3), a matrix camera (5), an objective (4) forming the image of the light source (3) given by the cornea (2) of the eye (1) to be examined, an electronic circuit board (15) connected to the output of the matrix camera (5) and supplying, from a video signal made up of a plurality of video lines (9) and supplied by the matrix camera (5), a plurality of digital values (t₁, t₂) describing the elliptical image (7), and a microprocessor element (19) receiving and processing the said plurality of digital values (t₁, t₂) in order to extract the data for the value of the large radius of curvature, the small radius of curvature and the angular position of the principal axis of the cornea (2).

5. Apparatus as claimed in Claim 4, characterised in that the said electronic circuit board (15) connected to the output of the matrix camera (5) comprises means for binarisation of the video signal supplied by the camera.

6. Apparatus as claimed in Claim 4 or Claim 5, characterised in that it is associated in a common general structure with an automatic refractometer device.

## Patentansprüche

1. Verfahren zum automatischen Messen der Keratometrie, darin bestehend, eine Lichtquelle (3) in Form eines kreisförmigen Kranzes vor der Hornhaut (2) des zu untersuchenden Auges anzuordnen und numerische Informationen bezüglich des durch die Hornhaut (2) erzeugten Bildes (7) des Kranzes (3) zu verarbeiten, um daraus die Werte des großen Halbmessers der Krümmung, des kleinen Halbmessers der Krümmung und der Winkelposition der Hauptachse der Hornhaut (2) zu ermitteln,
**dadurch gekennzeichnet,**
daß das durch die Hornhaut (2) erzeugte elliptische Bild (7) mittels einer eine auf einer großen Anzahl von Punkten basierende Messung in sehr kurzer Zeit aufnehmenden Matrizenkamera in ein video-elektronisches Signal aus einer Folge video-elektronischer Zeilen, von denen jede jeweils mit einer horizontalen Linie (10) des elliptischen Bildes (7) korrespondiert, überführt wird, dessen Amplitude eine Funktion des Kontrastes des Bildes (7) im Verhältnis zu seinem Hintergrund (8) ist,
daß man auf jeder video-elektronischen Zeile (9) des Signales die Partien (13, 14) des Bildes (7), die zur korrespondierenden Linie (10) des Bildes (7) gehören, kennzeichnende Hinweise der Dauer (t₁, t₂) mißt, und daß man auf einem Datenverarbeiter (19) mittels einer geeigneten Logik den Komplex der Hinweise der Dauer, die mit der Folge der video-elektronischen Zeilen (9) des Signals korrespondieren, verarbeitet.

2. Verfahren nach Anspruch 1, dadurch gekennzeichnet, daß jede Zeile des Videosignals (9) zwei Peaks (11, 12) präsentiert, die mit den Partien (13, 14) des Bildes (7) korrespondieren, die sich auf der korrespondierenden horizontalen Linie (10) des Bildes (7) präsentieren, wobei die erwähnten gemessenen Hinweise der Dauer (t₁, t₂) diejenigen sind, welche den Anfang der Videozeile (9) vom ersten Peak (11) trennen und den ersten Peak (11) vom zweiten Peak (12) trennen.

3. Verfahren nach Anspruch 2, dadurch gekennzeichnet, daß vor der Messung der genannten Hinweise der Dauer das Signal binarisiert wird, um den Graupegel zu unterdrücken.

4. Einrichtung zur Durchführung des Verfahrens nach einem der Ansprüche 1 bis 3,
**dadurch gekennzeichnet,**
daß sie eine Lichtquelle in Form eines kreisförmigen Kranzes (3), eine Matrizenkamera (5), ein Objektiv (4) zur Formung eines durch die Hornhaut (2) des zu untersuchenden Auges (1) erzeugten Bildes der Lichtquelle (3), eine am Ausgang der Matrizenkamera (5) angeschlossene Elektronikkarte (15), die ausgehend von einem aus einer Mehrzahl von Videozeilen (9) gebildeten Videosignal, welches durch die Matrizenkamera (5) geliefert wird, eine Mehrzahl von numerischen Werten (t₁, t₂) liefert, die das elliptiche Bild (7) beschreiben, und ein Mikroprozessorelement (19), welches die genannte Mehrzahl von numerischen Werten (t₁, t₂) erhält und verarbeitet, um die Informationen über den Wert des großen Halbmessers der Krümmung, des kleinen Halbmessers der Krümmung und der Winkelposition der Hauptachse der Hornhaut (2) daraus zu ziehen, umfaßt.

5. Einrichtung nach Anspruch 4, dadurch gekennzeichnet, daß die genannte Elektronikkarte (15), die am Ausgang der Matrizenkamera (5) angeschlossen ist, Mittel zur Binarisierung des von der Matrizenkamera (5) gelieferten Videosignals umfaßt.

6. Einrichtung nach Anspruch 4 oder Anspruch 5, dadurch gekennzeichnet, daß sie, innerhalb einer allgemeinen herkömmlichen Struktur, mit einem automatischen Refraktometer-Gerät verbunden ist.
